# EUROPÄISCHE PATENTANMELDUNG

(11) **EP 1 227 000 A2**
(43) Veröffentlichungstag der Anmeldung: **31.07.2002**
(21) Anmeldenummer: 01128711.7
(22) Anmeldetag: 03.12.2001
(51) Int. Cl.: B60N 3/10

(54) **Halter für eine Flasche zum Einbau in einen Kraftwagen**

(30) Priorität: 24.01.2001 DE 10103140
(71) Anmelder: fischerwerke Artur Fischer GmbH & Co. KG, 72178 Waldachtal (DE)
(72) Erfinder: Schaal, Falk, 72275 Alpirsbach (DE)

(57) **Zusammenfassung**

Die Erfindung betrifft einen Halter (10) für eine Flasche zum Einbau in einen Kraftwagen. Die Erfindung schlägt vor, den Halter (10) mit bügelförmigen, fächerartig auseinanderschwenkbaren Halteelementen (12 bis 15) auszubilden, die in der aufgefächerten Stellung einen Haltering (22) an einer Stirnseite des Halters (10) bilden, in den die nicht dargestellte Flasche einstellbar ist. Durch eine lange Ausbildung von Schenkeln (18) der Halteelemente (12 bis 15) lässt sich eine große Haltehöhe des Halterings (22) über einer Abstellfläche (28, 30) und damit ein kippsicherer Halt der eingestellten Flasche erreichen.

## Beschreibung

Die Erfindung betrifft einen Halter für eine Flasche zum Einbau in einen Kraftwagen oder ein sonstiges Fortbewegungsmittel mit den Merkmalen des Oberbegriffs des Anspruchs 1.

Es ist eine Vielzahl an Haltern für niedrige Getränkebehälter wie eine Getränkedose, einen Becher oder eine Tasse zum Einbau in Kraftwagen bekannt. Die bekannten Halter haben allerdings den Nachteil einer niedrigen Haltehöhe. Mit Haltehöhe ist die Höhe gemeint, in der der Halter einen eingestellten Getränkebehälter an dessen Umfang abstützt. Zum kippsicheren Halten eines hohen Getränkebehälters wie beispielsweise einer Flasche sind die bekannten Halter nicht geeignet.

Der Erfindung liegt deswegen die Aufgabe zu Grunde, einen Halter der vorstehend genannten Art so auszubilden, dass er einen hohen Getränkebehälter wie beispielsweise eine Flasche sicher gegen Kippen hält.

Diese Aufgabe wird erfindungsgemäß durch die Merkmale des Anspruchs 1 gelöst. Der erfindungsgemäße Halter mit den Merkmalen des Anspruchs 1 weist schwenkbar gelagerte Halteelemente auf, die fächerartig auseinanderschwenkbar sind. Dabei bilden Seiten oder Schenkel der Halteelemente Fächerelemente. In einer aufgefächerten Stellung bilden die Seiten oder Schenkel der Halteelemente eine Fächerfläche. An einer insbesondere rechtwinklig an die Fächerfläche angrenzenden Stirnseite bilden die Halteelemente in der aufgefächerten Stellung einen Haltering, in den die Flasche einstellbar ist. Der Haltering muss weder kreisförmig noch geschlossen sein, er stützt die eingestellte Flasche an deren Umfang in seitlicher Richtung ab. Der erfindungsgemäße Halter ermöglicht eine große Haltehöhe, in der sein Haltering eine in den Halter eingestellte Flasche über deren Boden an ihrem Umfang abstützt. Dadurch hält der erfindungsgemäße Halter auch hohe Getränkebehälter wie beispielsweise eine Flasche kippsicher.

Eine Ausgestaltung der Erfindung weist bügelförmige Halteelemente auf, die an ihren Schenkeln schwenkbar gelagert sind und deren Stirnseiten in aufgefächerter Stellung den Haltering bilden.

Eine Ausgestaltung der Erfindung sieht eine Blende an einer Stirnseite eines Halteelements vor, die in zusammengeklappter Stellung der Halteelemente die Halteelemente abdeckt.

Auch wenn es prinzipiell möglich ist, dass die Halteelemente um verschiedene Schwenkachsen schwenkbar sind, sieht eine bevorzugte Ausgestaltung eine gemeinsame Schwenkachse für die Halteelemente vor. Die Schwenkachse weist Abstand von der Stirnseite auf, die in der aufgefächerten Stellung der Halteelemente den Haltering bildet. Bei bügelförmigen Halteelementen ist die Schwenkachse insbesondere an freien Enden der Schenkel der Halteelemente vorgesehen. Die Schwenkachse verläuft parallel oder in etwa parallel zur Stirnseite und senkrecht oder näherungsweise senkrecht zur Fächerfläche, die die Halteelemente in der aufgefächerten Stellung bilden.

Um den Halter bei Nichtgebrauch versenken zu können sieht eine Ausgestaltung der Erfindung vor, die Halteelemente schwenkbar an einem Schieber zu lagern, der schubladenartig verschiebbar geführt ist.

Eine Ausgestaltung der Erfindung sieht ein Stellelement vor, auf dem eine in den Halter eingestellte Flasche steht. Das Stellelement ist schwenkbar, um es bei Nichtgebrauch platzsparend unterzubringen. Das Stellelement kann ein- oder zweiteilig ausgebildet sein. Es bildet vorzugsweise eine Tropfschale.

Die Erfindung wird nachfolgend anhand eines in der Zeichnung dargestellten Ausführungsbeispiels näher erläutert. Es zeigen:
- Figur 1: einen erfindungsgemäßen Halter in aufgefächerter Stellung in perspektivischer Darstellung;
- Figur 2: den Halter aus Figur 1 in zusammengeklappter Stellung;
- Figur 3: den Halter aus Figur 1 in versenkter Stellung;
- Figur 4: den Halter aus Figur 1 in aufgefächerter Stellung in einer Schnittdarstellung;
- Figur 5: den Halter aus Figur 1 in zusammengeklappter Stellung in einer Schnittdarstellung; und
- Figur 6: den Halter aus Figur 1 in versenkter Stellung in einer Schnittdarstellung.

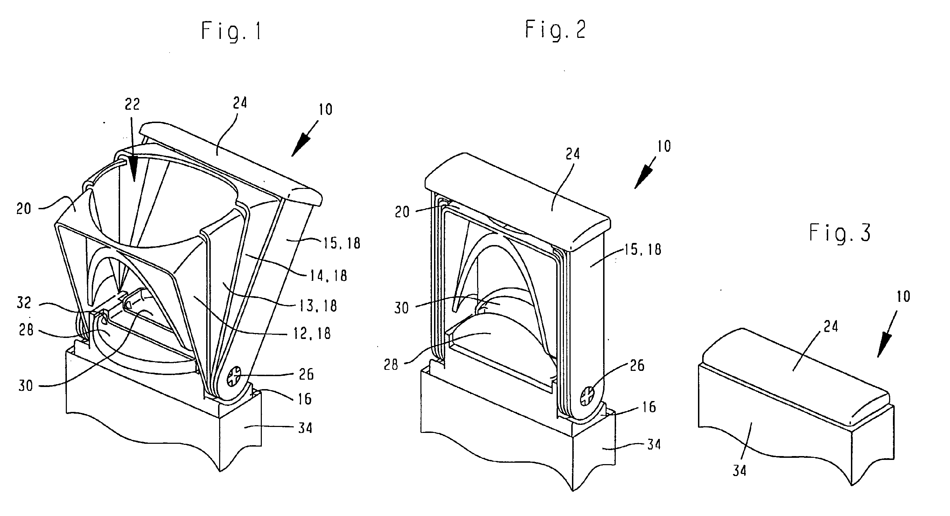

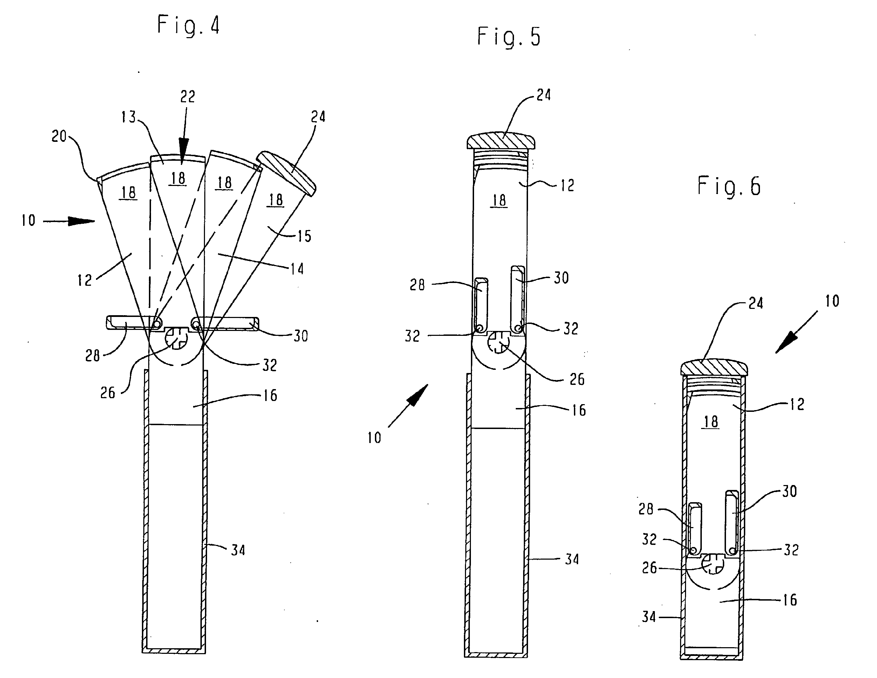

Der in Figur 1 dargestellte, erfindungsgemäße Halter 10 ist zum Einbau in einen nicht dargestellten Kraftwagen, beispielsweise in dessen Mittelkonsole vorgesehen. Der Halter 10 ist zum Einstellen beispielsweise einer Flasche vorgesehen. Im dargestellten und beschriebenen Ausführungsbeispiel weist der Halter 10 vier Haltelemente 12 bis 15 auf, die wie in Figuren 1 und 4 dargestellt fächerartig auseinanderschwenkbar an einem Schieber 16 gelagert sind. Drei Halteelemente 12, 14, 15 sind bügelförmig ausgebildet, sie weisen zwei Schenkelwände 18 auf, die auf einer Stirnseite einstückig durch eine Jochwand 20 miteinander verbunden sind. Bei einem Halteelement 13, das zwischen zwei anderen Halteelementen 12, 14 angeordnet ist, fehlt die Jochwand, es weist lediglich die beiden Schenkelwände 18 auf. Die Jochwände 20 der Halteelemente 12, 14 die dem Halteelement 13 benachbart sind, das keine Jochwand aufweist, sind kreisbogenförmig ausgeschnitten, so dass die Stirnseiten der drei genannten Halteelemente 12, 13, 14 in der aufgefächerten, in Figuren 1 und 4 dargestellten Stellung einen Haltering 22 bilden, wie in Figur 1 zu sehen. In den Haltering 22 ist eine nicht dargestellte Flasche einstellbar, die vom Haltering 22 an ihrem Umfang kippsicher in seitlicher Richtung abgestützt wird.

Das vierte Halteelement 15 weist keine Haltefunktion auf, es trägt eine Blende 24 an seiner Stirnseite, die in zusammengeklappter Stellung (Figuren 2 und 5) alle Halteelemente 12 bis 15 an der Stirnseite abdeckt.

An freien Enden sind die Schenkelwände 18 der Halteelemente 12 bis 15 schwenkbar auf Zapfen 26 gelagert, die seitlich vom Schieber 16 abstehen. Die beiden Haltezapfen 26 definieren eine gedachte, gemeinsame Schwenkachse für die Haltelemente 12 bis 15 parallel zu deren Stirnseiten Jochwände 20 und senkrecht zu deren Schenkelwänden 18. Durch eine lange Ausbildung der Schenkelwände 18 der Halteelemente 12 bis 15 lässt sich ein großer Abstand des Halterings 22 von der durch die Zapfen 26 definierten Schwenkachse der Halteelemente 12 bis 15 und damit eine große Haltehöhe für eine in den Halter 10 eingestellte Flasche erreichen.

Etwa in Höhe der Zapfen 26 des Schiebers 16 ist eine Abstellfläche 28, 30 als Abstellfläche für eine in den Halter 10 eingestellte Flasche angeordnet. Die Abstellfläche 28, 30 weist zwei in etwa halbkreisförmige Stellelemente 28, 30 auf, die um Zapfen 32 schwenkbar am Schieber 16 gelagert sind. Zusammen mit dem Schieber 16 bilden die halbkreisförmigen Stellelemente 28, 30 eine Tropfschale.

In der auseinandergeschwenkten, aufgefächerten Stellung bilden die Schenkelwände 18 der Halteelemente 12 bis 15 eine Art Fächer bzw. eine Fächerfläche. Die durch die Zapfen 26 definierte Schwenkachse der Halteelemente 12 bis 15 verläuft senkrecht zu der von den Schenkelwänden 18 gebildeten Fächerfläche.

Der Schieber 16 ist schubladenartig verschiebbar in einem Gehäuse 34 des Halters 10 geführt. Das Gehäuse 34 ist schachtelförmig und an einer Stirnseite offen. Bei Nichtgebrauch lassen sich die Halteelemente 12 bis 15 wie in Figuren 2 und 5 dargestellt ineinander schwenken (zusammengeklappte Stellung) und gemeinsam mit dem Schieber 16 in das Gehäuse 34 einschieben (versenken). Die versenkte Stellung ist in Figuren 3 und 6 dargestellt. In der versenkten Stellung verschließt die Blende 24 das Gehäuse 34 des Halters 10. Zum Versenken werden die die Abstellfläche und die Tropfschale bildenden Stellelemente 28, 30 wie in Figuren 2, 5 und 6 dargestellt, nach oben zwischen die Halteelemente 12 bis 15 geschwenkt. Ein Verschieben des Halters 10 aus dem Gehäuse 34 heraus (Ausfahren) kann in an sich bekannter Weise mit einem in der Zeichnung nicht dargestellten Federelement erfolgen, das sich im Gehäuse 34 abstützt und den Schieber 16 in eine aus der offenen Seite des Gehäuses 34 vorstehende Stellung verschiebt, wie sie in Figuren 1, 2, 4, 5 dargestellt ist. In der versenkten Stellung wird der Schieber 10 mit einer nicht dargestellten, an sich bekannten Verriegelungseinrichtung (Herzkurvenverriegelung oder Push-Push-Mechanik) gehalten, die durch kurzen Druck auf die Blende 24 des versenkten Halters 10 entriegelbar ist. Da derartige Verriegelungseinrichtungen und Federelemente zum Verschieben des Schiebers 16 von Haltern für Getränkebehälter bekannt und nicht der eigentliche Gegenstand der Erfindung sind, wird von deren Darstellung und näherer Erläuterung abgesehen.

## Patentansprüche

1. Halter für eine Flasche zum Einbau in einen Kraftwagen, **dadurch gekennzeichnet, dass** der Halter (10) fächerartig auseinanderschwenkbare Halteelemente (12 bis 15) aufweist, die in aufgefächerter Stellung einen Haltering (22) zum Einstellen der Flasche an einer Fächerfläche (18) angrenzenden Stirnseite (20) der Halteelemente (12 bis 15) bilden.

2. Halter nach Anspruch 1, **dadurch gekennzeichnet, dass** der Halter (10) bügelförmige Halteelemente (12, 14, 15) aufweist.

3. Halter nach Anspruch 1, **dadurch gekennzeichnet, dass** ein Halteelement (15) eine Blende (24) an der Stirnseite aufweist, die in zusammengeklappter Stellung der Halteelemente (12 bis 15) die Halteelemente (12 bis 15) abdeckt.

4. Halter nach Anspruch 1, **dadurch gekennzeichnet, dass** die Halteelemente (12 bis 15) um eine gemeinsame Schwenkachse schwenkbar sind, die mit Abstand von der Stirnseite (20) des Halters (10), im wesentlichen parallel zu dieser und im wesentlichen senkrecht zur Fächerfläche (18) angeordnet ist.

5. Halter nach Anspruch 1, **dadurch gekennzeichnet, dass** die Halteelemente (12 bis 15) an einem schubladenartig verschiebbar geführten Schieber (16) schwenkbar gelagert sind.

6. Halter nach Anspruch 1, **dadurch gekennzeichnet, dass** der Halter (10) ein schwenkbares Stellelement (28, 30) aufweist, das eine Abstellfläche für eine in den Haltering (22) eingestellte Flasche bildet.

7. Halter nach Anspruch 6, **dadurch gekennzeichnet, dass** das Stellelement (28, 30) zweiteilig ausgebildet ist.

8. Halter nach Anspruch 6, **dadurch gekennzeichnet, dass** das Stellelement (28, 30) eine Tropfschale bildet.
